(19) Europäisches Patentamt
European Patent Office
Office européen des brevets

(11) EP 0 683 801 B1

(12) **FASCICULE DE BREVET EUROPEEN**

(45) Date de publication et mention de la délivrance du brevet:
**15.11.2000 Bulletin 2000/46**

(21) Numéro de dépôt: **95903379.6**

(22) Date de dépôt: **08.12.1994**

(51) Int. Cl.$^7$: **C08G 65/14**, C08G 65/32, C08G 65/16, C08G 65/04, H01M 6/18, H01M 10/40

(86) Numéro de dépôt international:
**PCT/FR94/01432**

(87) Numéro de publication internationale:
**WO 95/15991 (15.06.1995 Gazette 1995/25)**

(54) **PROCEDE DE PREPARATION D'UN TERPOLYMERE DU TYPE POLY(OXYALKYLENE) PAR HYDROGENATION**

VERFAHREN ZUR HERSTELLUNG EINES TERPOLYMERS VOM POLYOXYALKYLEN-TYP DURCH HYDRIERUNG

PROCESS FOR PRODUCING BY HYDROGENATION A TERPOLYMER OF THE POLY(OXYALKYLENE) TYPE

(84) Etats contractants désignés:
**DE FR GB IT**

(30) Priorité: **09.12.1993 FR 9314775**

(43) Date de publication de la demande:
**29.11.1995 Bulletin 1995/48**

(73) Titulaires:
- **CENTRE NATIONAL DE LA RECHERCHE SCIENTIFIQUE (CNRS)**
  **75016 Paris (FR)**
- **HYDRO-QUEBEC**
  **Montréal Québec H2Z 1A4 (CA)**

(72) Inventeurs:
- **SANCHEZ, Jean-Yves**
  **F-38330 Saint-Ismier (FR)**
- **ALLOIN, Fannie**
  **F-38100 Grenoble (FR)**
- **MASSON, Jacqueline**
  **F-38320 Eybens (FR)**

(74) Mandataire: **Sueur, Yvette et al**
**Cabinet SUEUR & L'HELGOUALCH,**
**109, boulevard Haussmann**
**75008 Paris (FR)**

(56) Documents cités:
**EP-A- 0 174 894**
**EP-A- 0 302 332**
**EP-A- 0 331 342**
**EP-A- 0 458 262**
**FR-A- 1 573 443**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Xerox (UK) Business Services
2.16.7 (HRS)/3.6

## Description

La présente invention concerne un procédé de préparation de copolymères présentant des propriétés solvatantes, utiles pour l'élaboration de matériaux à conduction ionique.

Il est connu d'utiliser des polymères solvatants pour l'élaboration de matériaux à conduction ionique. Les polymères d'oxyde d'éthylène ou de dioxolanne sont des polymères solvatants vis à vis des cations, en particulier des cations alcalins tels que par exemple l'ion $Li^+$ présent dans les générateurs électrochimiques rechargeables du type batterie au lithium à électrolyte polymère. Cependant, ces polymères sont semi-cristallins, le taux de cristallinité évoluant en fonction de la masse molaire du polymère. Ce caractère semicristallin des polymères a pour conséquence de diminuer la conductivité des matériaux qui le contiennent.

Pour l'élaboration de matériaux à conduction ionique, on a également utilisé des polymères solvatants qui sont amorphes dans tout l'intervalle de températures d'utilisation, par exemple le poly(oxyde de propylène) (PPO). La conductivité ionique à température ambiante des complexes PPO/$LiClO_4$ ou PPO/$CF_3SO_3Li$ est nettement supérieure à celle de leurs homologues de polyoxyde d'éthylène (POE) ; toutefois, à des températures plus élevées, des précipitations de sel apparaissent dans les complexes PPO/$LiClO_4$ ou PPO/$CF_3SO_3Li$, ce qui rend leur conductivité intérieure à celle des complexes POE/$LiClO_4$ ou POE/$CF_3SO_3Li$, à ces températures élevées.

On a alors trouvé que l'on pouvait diminuer la cristallinité des polymères semi-cristallins, sans affecter leurs propriétés solvatantes et leur stabilité électrochimique, en introduisant des irrégularités dans la chaîne macromoléculaire à intervalle si possible régulier. A titre d'exemple, on peut citer les copolymères obtenus à partir d'un oxiranne substitué et d'un éther cyclique ayant plus de 3 atomes de carbone US-A-4 758 483 (M. Armand, D. Muller et al.) ou les copolymères d'oxiranne et de dioxolanne (demande de brevet français déposée sous le n° 92.08716, G. Goulart, et al.).

Toutefois, on a constaté que l'introduction dans un polymère semi-cristallin tel que par exemple un POE de haute masse, d'unités créant des irrégularités, c'est-à-dire le remplacement du polymère semi-cristallin par un copolymère ou un polycondensat, s'accompagnait fréquemment d'une diminution des propriétés mécaniques, notamment à haute température. On a cherché à remédier à cet inconvénient en introduisant dans le polymère des motifs qui permettent la formation de réseaux tridimensionnels par une réticulation du copolymère, avant ou après sa mise en forme. En raison des contraintes imposées par les exigences de stabilité électrochimique, les motifs permettant la réticulation particulièrement préférés sont choisis parmi les insaturations carbone/carbone, telles que les fonctions allyliques ou vinyliques. Il est alors apparu que lorsque l'on introduisait dans le polymère une quantité de motifs suffisamment élevée pour réduire la cristallinité au degré souhaité, le copolymère comportait un très grand nombre de noeuds de réticulation. L'électrolyte qui comportait un tel copolymère avait alors une température de transition vitreuse très élevée, ce qui diminuait sa conductivité ionique, son caractère élastomère et l'adhésion entre l'électrolyte et les électrodes. En revanche, lorsque la quantité de monomère réticulable était maintenue à un niveau suffisamment faible pour que les propriétés élastomères soient conservées, les enchaînements d'unités solvatantes étaient longs et, de ce fait, la cristallinité était maintenue à un niveau élevé.

Pour pallier ces inconvénients, on a alors utilisé des copolymères comportant simultanément des unités solvatantes, des unités capables de diminuer la cristallinité ne comportant pas d'insaturations carbone/carbone, et des unités capables de diminuer la cristallinité et comportant des insaturations carbone/carbone. Divers procédés de préparation ont été développés dans ce but. Toutefois, la copolymérisation ou la condensation de trois monomères différents est en général plus compliquée et plus onéreuse que la copolymérisation ou la condensation de deux monomères seulement. Il en est ainsi de la préparation d'un terpolymère oxyde d'éthylène / allyl glycidyl éther / méthyl glycidyl éther, par comparaison avec la préparation d'un copolymère oxyde d'éthylène / allyl glycidyl éther, en raison du coût élevé du méthyl glycidyl éther.

La présente invention a pour but de proposer un procédé plus simple et économiquement plus intéressant que les procédés de l'art antérieur pour la préparation d'un copolymère présentant des propriétés solvatantes, une bonne tenue mécanique et un caractère élastomère.

Le procédé de la présente invention est un procédé pour la préparation d'un copolymère ou d'un polycondensat dont la chaîne macromoléculaire est constituée essentiellement par des unités solvatantes susceptibles d'induire un caractère cristallin, des unités permettant de diminuer la cristallinité du copolymère ou du polycondensat, et éventuellement des unités réticulables, toutes ces unités étant du type oxyalkylène ou du type oxyalkénylène indépendamment les unes des autres, caractérisé en ce que :

- au cours d'une première étape, on prépare un copolymère ou un polycondensat comprenant des unités solvatantes susceptibles d'induire un caractère cristallin choisies parmi les unités oxyalkylènes dans lesquelles le groupement alkylène porte éventuellement un substituant méthyle, et des unités qui ont une insaturation carbone / carbone choisies parmi les unités oxyalkénylènes dont la double liaison carbone / carbone peut être polymérisée par

voie radicalaire, dans des conditions qui n'affectent pas ladite insaturation ;

- au cours d'une deuxième étape, on procède à l'hydrogénation d'au moins une partie des insaturations.

Dans la suite du texte, l'expression "unité solvatante" désignera une unité solvatante susceptible d'induire un caractère cristallin, l'expression "unité insaturée" désignera une unité qui comprend une insaturation carbone / carbone, l'expression "unité diminuant la cristallinité" désignera une unité permettant de diminuer la cristallinité du copolymère ou du polycondensat.

L'hydrogénation du copolymère ou du polycondensat obtenu à la fin de la première étape du procédé peut être effectuée sous pression d'hydrogène en présence d'un catalyseur qui peut être choisi parmi les catalyseurs utilisés dans l'art antérieur pour l'hydrogénation des insaturations carbone / carbone, et notamment le nickel de Raney, un catalyseur du type coordiné comprenant un métal de transition, par exemple Co ou Ni, un agent réducteur du type trialkylaluminium et un hydrocarbure insaturé tel que le cyclohexène, un complexe cobalt-pyridine, un chélate de nickel et de phénol ou un borate du type $BH_3+CH_3CO_2H$. L'hydrogénation peut également être effectuée au moyen d'un agent d'hydrogénation telle que la p-toluènesulfonylhydrazide.

Lorsque l'hydrogénation du copolymère obtenu dans la première étape du procédé de la présente invention est effectuée en présence de nickel de Raney, on dissout le copolymère dans le méthanol et l'on ajoute le nickel de Raney. La concentration pondérale en copolymère de la solution est choisie en fonction de la composition du copolymère, c'est-à-dire de la proportion d'unités monomères insaturées dans sa chaîne macromoléculaire, ainsi que de la proportion d'unités insaturées que l'on veut hydrogéner. Généralement, on choisit une quantité de copolymère telle que la concentration molaire en doubles liaisons soit comprise entre $10^{-2}$ et $5.10^{-2}$ mole/l. La réaction est effectuée sous une pression d'hydrogène comprise entre $8x10^5$ Pa et $5x10^6$ Pa. La température du milieu réactionnel est maintenue entre 18°C et 100°C suivant le taux d'unités insaturées que l'on veut hydrogéner. La quantité de Ni de Raney introduit dépend de la teneur en doubles liaisons et varie entre 1 et 10 g/l, les concentrations élevées en catalyseur correspondant aux taux d'hydrogénation les plus forts.

Lorsque l'hydrogénation du copolymère est effectuée au moyen de p-toluènesulfonylhydrazide, on dissout le copolymère dans un solvant choisi parmi le xylène, la diméthylformamide et le diglyme, et l'on ajoute la p-toluènesulfonylhydrazide en une quantité telle que le rapport du nombre de doubles liaisons au nombre de moles de catalyseur soit compris entre 0,5 et 1.

Lorsqu'une partie seulement des unités insaturées sont hydrogénées, le procédé de l'invention permet d'obtenir un copolymère comprenant trois types différents d'unités, à savoir des unités solvatantes, des unités diminuant la cristallinité et des unités insaturées, à partir de deux types de monomères. On dispose ainsi d'un procédé de préparation de terpolymères plus simple et plus économique que les procédés de l'art antérieur dans lesquels on copolymérise trois types différents de monomères.

Le procédé de l'invention présente également un intérêt lorsque la deuxième étape consiste en une hydrogénation de toutes les unités insaturées. Il permet alors d'introduire des unités saturées dans la chaîne d'un polymère à partir d'un monomère insaturé. Cette possibilité est utile lorsque l'utilisation d'un monomère insaturé est plus avantageuse que l'utilisation du monomère saturé correspondant, par exemple pour des raisons de difficulté de préparation ou de polymérisation, ou pour des raisons économiques.

La première étape du procédé de la présente invention peut être mise en oeuvre selon différentes variantes et avec des monomères ou des prépolymères de nature différente, suivant la nature du copolymère final recherché.

Suivant un mode de mise en oeuvre, la première étape du procédé de la présente invention peut consister en une copolymérisation par voie cationique d'au moins un monomère du type oxyde d'alkylène cyclique ou du type acétal cyclique ayant au moins trois chaînons, non substitué ou portant un substituant méthyle, et d'au moins un monomère du type oxyde d'alkylène cyclique ou du type acétal cyclique ayant au moins trois chaînons, portant un substituant qui comprend une double liaison carbone - carbone. Parmi ces monomères, on peut citer par exemple les oxirannes, les oxétanes, les dioxolannes, etc. Dans ce cas, les unités solvatantes peuvent être fournies par exemple par l'oxyde d'éthylène, l'oxyde de propylène, l'oxétane ou le dioxolanne portant éventuellement un substituant méthyle, et les unités insaturées peuvent être fournies par exemple par le monoxyde de butadiène, l'époxy-1,2 hexène-5, l'époxy-1,2 octène-7, l'allyl glycidyl éther et le furfuryl glycidyl éther. A titre d'exemple on peut citer la copolymérisation cationique de dioxolanne $\overline{CH_2-O-CHR-CH_2-O}$, qui fournit les motifs solvatants, et d'un oxiranne $\overline{CH_2-CHR'-O}$ qui porte un substituant insaturé R', le substituant R représentant un atome d'hydrogène ou un radical méthyle ; le substituant R' pouvant être choisi parmi les radicaux qui comportent une insaturation éthylénique, tels que par exemple les radicaux alkényles $CH_2=CH-(CH_2)_q-$ dans lesquels $1 \leq q \leq G$ et les radicaux $CH_3-(CH_2)_y-CH=CH-(CH_2)_x-$dans lesquels $0 \leq x+y \leq 5$ et $0 \leq x$ (par exemple un radical butène) ou parmi les radicaux allyloxyalkylènes ayant de 4 à 8 atomes de carbone (par exemple $-CH_2-O-CH_2-CH=CH_2$). La polymérisation cationique de l'oxiranne et du dioxolanne appropriés est effectuée avantageusement en présence d'un amorceur choisi parmi $BF_3(OC_2H_5)_2$, $C_6H_5COX^1$ ou $C_6H_5CH_2X^1$ dans lesquels $X^1$ représente

$SbF_6$, $PF_6$, $AsF_6$, $BF_4$, $ClO_4$ ou $CF_3SO_3$, $SbF_6$ étant particulièrement préféré, ou pCl-$C_6H_4N_2Y^1$, $Y^1$ représentant $PF_6$ ou $BF_4$.

Dans un autre mode de mise en oeuvre, les copolymères de la première étape du procédé de la présente invention peuvent être obtenus par une réaction de polycondensation en présence d'une base B', d'au moins un composé $A'(OH)_i$ avec au moins un composé $Z(CH_2X)_j$, les proportions relatives des différents $A'(OH)_i$ étant telles que le rapport du nombre de fonctions OH au nombre de segments A' soit au moins égal à 2, les proportions relatives des différents $Z(CH_2X)_j$ étant telles que le rapport du nombre de radicaux X au nombre de segments Z soit au moins égal à 2. Dans les formules ci-dessus, A' désigne un segment solvatant non réticulable par voie radicalaire ayant une valence i telle que $1 \leq i \leq 6$ ; Z représente un radical organique ayant une valence j telle que $1 \leq j \leq 6$, et possédant en outre au moins une insaturation carbone / carbone ; X représente un groupe partant. Dans un composé $A'(OH)_i$, A' est un polyoxyéthylène, un polyoxypropylène, un copolyoxyéthylèneoxypropylène, un copolymère d'oxyde d'éthylène ou d'oxyde de propylène avec un comonomère polymérisable par formation de liaisons éthers, ledit comonomère polymérisable pouvant être l'oxyméthylène, l'oxétane, le tétrahydrofurane et le dioxolanne. Parmi les radicaux appropriés pour Z, on peut citer les radicaux dérivés de dihalogénoalcènes, par exemple les radicaux dérivés d'un dihalogéno-cis butène-2, d'un dihalogéno-trans butène-2, d'un dihalogéno-méthyl-2 propène ou d'un dihalogéno-cis hexadiène-2,4. Le groupe partant X peut être un halogénure, plus particulièrement un chlorure, un bromure ou un iodure, ou bien un sulfate $R'OSO_3$ ou un sulfonate $R'SO_3$ dans lesquels R' représente un groupe organique ayant moins de 20 atomes de carbone, de préférence un groupe alkyle, un groupe aryle, un groupe alkylaryle, ces groupes pouvant être éventuellement halogénés. Les dihalogénoalkylènes, par exemple le chloro-3 chlorométhyl-2 propène-1 sont particulièrement préférés. La base B' est choisie parmi les hydroxydes de métaux alcalins ou alcalino-terreux, les hydroxydes d'ammoniums quaternaires, en particulier les résines échangeuses d'anions contenant des groupements benzyltrialkylammoniums sous forme d'hydroxyde, les hydrures, les amidures ou les alkoxydes de métaux alcalins ou alcalino-terreux, les bases organiques non nucléophiles et difficilement quaternisables telles que le 1,8-bis(diméthylamino)naphtalène et la pentaméthyl-1,2,2,6,6 pipéridine.

Suivant un autre mode de réalisation, les copolymères de la première étape du procédé de la présente invention peuvent être préparés par un procédé dans lequel on effectue une copolymérisation en présence d'un catalyseur de Vandenberg, d'un oxiranne répondant à la formule $\overline{CH_2\text{-}CHR^1\text{-}O}$ et d'un oxiranne répondant à la formule $\overline{CH_2\text{-}CHR^2\text{-}O}$. Dans le monomère $\overline{CH_2\text{-}CHR^1\text{-}O}$, $R^1$ représente un radical comportant une insaturation carbone / carbone, choisi par exemple parmi les radicaux alkényles $CH_2=CH-(CH_2)_q-$ dans lesquels $1 \leq q \leq 6$ et les radicaux alkényles $CH_3-(CH_2)_y-CH=CH-(CH_2)_x-$ dans lesquels $0 \leq x+y \leq 5$ et $0 \leq x$, par exemple le radical $-CH_2-CH_2-CH=CH_2$. $R^1$ peut également être choisi parmi les radicaux allyloxyalkylènes ayant de 4 à 8 atomes de carbone, par exemple, le radical - $CH_2-O-CH_2-CH=CH_2$. $R^1$ peut en outre être choisi parmi les radicaux $CH_2=CH-CO-O-CH_2-$, $CH_2=C(CH_3)-CO-O-CH_2-$ et $CH_2=CH-\Phi$ $-O-(CH_2)_n-$. Dans le monomère $\overline{CH_2\text{-}CHR^2\text{-}O}$, $R^2$ représente un atome d'hydrogène ou un radical méthyle. Le catalyseur de Vandenberg comprend un amorceur et un coamorceur. L'amorceur est choisi parmi les composés organométalliques tels que les composés du type trialkyl aluminium, en particulier le triéthyl aluminium ou le tributyl aluminium, les composés du type dialkyl zinc ou diaryl zinc, en particulier le diéthyl zinc ou le diphényl zinc. Le coamorceur est généralement l'eau, et le milieu peut contenir en outre de l'éther diéthylique comme diluant.

Dans un autre mode de réalisation, le copolymère de la première étape peut être obtenu par une copolymérisation anionique d'au moins un monomère solvatant et d'au moins un monomère comportant une insaturation carbone / carbone, en présence d'un catalyseur choisi parmi les alcoolates de métal alcalin. Dans ce mode de réalisation, le monomère solvatant peut être choisi parmi les oxirannes répondant à la formule $\overline{CH_2\text{-}CHR^3\text{-}O}$ dans laquelle $R^3$ représente H ou un radical méthyle. L'oxiranne insaturé peut être choisi parmi les oxirannes répondant à la formule $\overline{CH_2\text{-}CHR^4\text{-}O}$ dans laquelle $R^4$ représente un radical comportant une liaison insaturée ne réagissant pas dans les conditions d'une polymérisation anionique, choisi par exemple parmi les radicaux ayant la formule $CH_2=CH-(CH_2)_q-(O-CH_2)_p$ avec $1 \leq q \leq 6$ et p=0 ou 1, ou la formule $CH_3-(CH_2)_y-CH=CH-(CH_2)_x-(OCH_2)_p$, avec $0 \leq x+y \leq 5$ et p=0 ou 1.

Selon encore un autre mode de mise en oeuvre, la première étape du procédé de la présente invention consiste à préparer un copolymère bloc comportant au moins un segment A solvatant constitué par des unités oxyalkylènes dans lesquelles le groupement alkylène porte éventuellement un substituant méthyle et au moins un segment B constitué par des unités oxyalkénylènes dont la double liaison carbone / carbone peut être polymérisée par voie radicalaire. Un copolymère du type AB ou du type BAB peut être obtenu en fixant un ou deux segments B sur un polymère précurseur du segment A.

Le polymère précurseur du segment A peut être préparé à partir du (des) monomère(s) appropriés, par une polymérisation anionique ou cationique ou par polycondensation, suivant la nature des fonctions réactives portées par les monomères. Il est également possible d'utiliser pour le segment A, des polymères du commerce tels que par exemple des poly(oxyde d'éthylène)

glycols.

Deux modes de fixation du segment B peuvent être mis en oeuvre. Soit on prépare d'abord le segment B par polymérisation du (des) monomère(s) choisi(s), puis l'on greffe le segment B sur le précurseur du segment A par l'intermédiaire de fonctions réactives appropriées présentes aux extrémités de A. Soit le précurseur du segment A est mis en contact avec le(s) monomère(s) précurseur(s) du segment B, et l'on amorce une polymérisation par un procédé qui n'affecte pas les insaturations carbone / carbone existant dans les monomères précurseurs du segment B.

Lorsque les fonctions terminales réactives du polymère précurseur du segment A sont des radicaux hydroxyl -OH ou des groupes amine -NHR, elles amorcent une polymérisation anionique des réactifs constituant B, après traitement par une base déprotonante telle NaH, KH, $KOC(CH_3)_3$, KOH, $Na^+$[naphtalène].

Les copolymères du type AB ou ABA peuvent être préparés d'une manière analogue aux copolymères BA ou BAB. Dans ce cas, l'on prépare d'abord le segment B par polymérisation du (des) monomère(s) approprié(s). Ensuite l'on greffe le(s) segment(s) A soit sous forme d'un segment préconstitué, soit en mettant le segment B en présence de monomères précurseurs de A dans les conditions de polymérisation appropriées.

Bien entendu, le procédé de la présente invention n'est pas limité aux modes de mise en oeuvre indiqués ci-dessus pour la première étape du procédé, qui ne sont donnés qu'à titre d'exemple, mais elle englobe tous les procédés permettant d'obtenir un copolymère comportant des unités solvatantes et des unités insaturées qui sont du type oxyalkylène ou du type oxyalkénylène, les deux types pouvant coexister dans une même macromolécule.

Les copolymères obtenus par le procédé de la présente invention sont utiles pour l'élaboration de matériaux à conduction ionique. Ceux qui ne comportent plus d'unités insaturées peuvent en outre être utilisés pour l'élaboration d'électrodes.

Pour la préparation d'un matériau à conduction ionique destiné à être utilisé comme électrolyte, il est préférable d'utiliser un copolymère dans lequel il reste des unités comportant des insaturations qui permettent une réticulation en vue d'améliorer les propriétés mécaniques. Dans un mode de mise en oeuvre particulier, un matériau à conduction ionique comprend essentiellement un composé ionique facilement dissociable en solution dans un copolymère selon la présente invention. Le composé ionique introduit dans le copolymère est choisi parmi les composés ioniques utilisés habituellement pour les matériaux du type polymère solide à conduction ionique. A titre d'exemple, on peut citer les composés ioniques $(1/mM)^+Y'^-$, dans lesquels $M^{m+}$ représente un proton, un cation métallique, un cation organique du type ammonium, amidinium ou guanidinium, m étant la valence du cation $M^{m+}$ ; $Y'^-$ représente un anion à charge électronique délocalisée, par exemple $Br^-$, $ClO_4^-$, $AsF_6^-$, $R_FSO_3^-$, $(R_FSO_2)_2N^-$, $(R_FSO_2)_3C^-$, $C_6H_{(6-x)}(CO(CF_3SO_2)_2C^-)_x$ ou $C_6H_{(6-x)}(SO_2(CF_3SO_2)_2C^-)_x$, $R_F$ représentant un groupement perfluoroalkyle ou perfluoroaryle, avec $1 \leq x \leq 4$. Les composés ioniques préférés sont les sels de lithium, et plus particulièrement $(CF_3SO_2)_2N^-Li^+$, $CF_3SO_3^-Li^+$, les composés $C_6H_{(6-x)}$-$[CO(CF_3SO_2)_2C^-Li^+]_x$ dans lesquels x est compris entre 1 et 4, de préférence avec x = 1 ou 2, les composés $C_6H_{(6-x)}$-$[SO_2(CF_3SO_2)_2C^-Li^+]_x$ dans lesquels x est compris entre 1 et 4, de préférence avec x = 1 ou 2. Des mélanges de ces sels entre eux ou avec d'autres sels peuvent être utilisés. A titre d'exemple de mélanges de sels on peut citer : $(CF_3SO_2)_2N^-Li^+$ et $CF_3SO_3^-Li^+$ ou $(CF_3SO_2)_2N^-Li^+$ et $C_6H_4$-$[CO(CF_3SO_2]_2C^-Li^+]_2$ dans des proportions variées, mais comprenant de préférence de 20 à 40% en poids de $(CF_3SO_2)_2N^-Li^+$.

Dans un autre mode de réalisation, on peut utiliser un copolymère selon l'invention qui comprend des unités insaturés sur lesquelles on greffe des composés ioniques qui comprennent une double liaison carbone-carbone réticulable.

Bien entendu, un matériau à conduction ionique comprenant essentiellement un copolymère obtenu par le procédé de la présente invention peut contenir en outre les ingrédients classiquement présents dans les matériaux à conduction ionique du type polymère organique, et notamment des plastifiants tels que le N,N,N',N'-tétraéthylsulfonamide ou le carbonate de propylène par exemple, qui ont pour effet d'augmenter la conductivité ionique des matériaux.

Les matériaux à conduction ionique, obtenus selon la présente invention sont particulièrement utiles pour les générateurs électrochimiques rechargeables ou non. Dans un tel générateur qui comprend une électrode négative et une électrode positive séparée par un électrolyte solide polymère, l'électrolyte et/ou au moins l'une des électrodes si elle est composite, sont constitués essentiellement par un matériau à conduction ionique comprenant un copolymère obtenu par le procédé de la présente invention.

Les copolymères sont également utiles dans d'autres systèmes électrochimiques tels que les systèmes électrochromes, les systèmes de modulation de lumière, pour l'élaboration de membranes sélectives ou de membranes de référence dans les capteurs à membrane.

La présente invention est décrite plus en détail à l'aide des exemples suivants, qui sont donnés pour illustrer l'invention mais qui n'ont pas de caractère limitatif.

**Exemple 1**

a) Préparation d'un copolymère

Dans un ballon bicol muni d'un palier d'agitation mécanique, on a introduit 4 g de poly(oxyéthylène) diol de masse 400 (POE 400) (commercialise par Aldrich sous la référence 20,239-8), 10 g de poly(oxyéthylène) diol de masse 1000 (POE 1000) (commercialisé par Aldrich sous la référence 20,242-8), et 2,48 g de chloro-3 chlorométhyl-2 propène-1. Le mélange a été porté à 40°C sous forte agitation mécanique, puis on a ajouté 6 g d'hydroxyde de potassium finement broyé. Après 10 heures de réaction, on a obtenu un produit de masse Mp = 72000 et Mn = 34000, en équivalent polystyrène. Le produit a été dissous dans le THF pour éliminer le KOH restant et le KCl formé. Après évaporation du THF, le produit a été solubilisé dans l'eau, et le KOH restant a été neutralisé par ajout d'une résine acide Amberlite IR118, commercialisée par Rohm & Haas. Ensuite le mélange a été filtré pour éliminer la résine, l'eau a été distillée et le séchage a été achevé dans un dessicateur sous vide à 50°C pendant 48 heures.

Le copolymère obtenu avait une température de fusion $T_f$ = 12,7°C, intermédiaire entre la température de fusion du POE 1000 et celle du POE 400.

b) Hydrogénation du polycondensat

A 10 g du polycondensat obtenu en a), on a ajouté 237 mg de Ni Raney dans 120 ml de méthanol. La réaction a été effectuée dans un réacteur maintenu à 18°C sous une pression de $8x10^5$ Pa d'hydrogène pendant 30 minutes. Le polycondensat a ensuite été récupéré et le catalyseur a été éliminé à l'aide d'un aimant. Le méthanol a été éliminé par évaporation.

Une analyse par RMN du proton du copolymère final obtenu a permis de constater que 50% des doubles liaisons ont été hydrogénées. Ce copolymère comportait des unités solvatantes $-CH_2-CH_2-O-$, des unités saturées $-CH_2-CH(CH_3)-O-$, et des unités insaturées $-CH_2-CH(=CH_2)-O-$.

c) Préparation d'une membrane à conduction ionique

Le copolymère obtenu en b) a été dissous dans l'acétonitrile en présence de peroxyde de benzoyle, le rapport en poids du peroxyde au copolymère étant de 4%. La solution obtenue a été coulée sur une plaque de verre, ensuite l'acétonitrile a été évaporé et le film obtenu a été porté à 80°C et maintenu à cette température pendant 3 heures sous atmosphère d'argon. On a ainsi obtenu une membrane élastique réticulée.

Cette membrane a été immergée dans une solution 1 M du sel de lithium du bis(trifluorométhanesulfonimide) dans l'acétonitrile, le volume de la solution étant tel que le rapport O/Li de la membrane imprégnée soit égal à 14. La conductivité de la membrane ainsi traitée, mesurée à 25°C, était de $2x10^{-5}$ $S.cm^{-1}$, ce qui représente le double de la conductivité d'une membrane traitée de manière similaire, mais obtenue à partir du copolymère de l'étape a) non hydrogéné.

**Exemple 2**

a) Préparation du copolymère

Un copolymère d'oxyde d'éthylène et d'allylglycidyléther a été préparé par une polymérisation coordonnée de Vandenberg. La réaction a été effectuée dans un réacteur sous pression d'argon en utilisant comme amorceur un mélange de triéthylaluminiuméther / acétone. Le copolymère obtenu comprend en moyenne 1 motif allylglycidyléther pour 20 motifs oxyde d'éthylène.

b) Hydrogénation du copolymère

10 g du copolymère obtenu en a) ont été introduits dans un réacteur et on y a ajouté 400 mg de nickel de Raney dans 120 ml de méthanol sous une pression de $8x10^5$ Pa d'hydrogène. Le mélange a ensuite été porté à 40°C et maintenu à cette température pendant 4 heures.

Le polymère a ensuite été récupéré et le catalyseur a été éliminé à l'aide d'un aimant. Le méthanol a été éliminé par évaporation.

Le nombre de doubles liaisons hydrogénées, déterminé par RMN $H^1$, est de 75%.

Le copolymère obtenu comprenait des motifs oxyde d'éthylène solvatants, des motifs insaturés allyl glycidyl éther et des motifs saturés propylglycidyléther.

c) Préparation d'une membrane

Une membrane a été préparée par co-dissolution dans l'acétonitrile du copolymère obtenu en b) et du sel $(CF_3SO_2)_2N^-Li^+$, dans des proportions telles que le rapport O/Li du complexe obtenu soit de 14, la solution contenant en outre 3% en poids de peroxyde de benzoyle. On a obtenu un film ayant une épaisseur de 100 µm, de la même manière que dans l'exemple 1. Ce film a ensuite été chauffé pendant 3 heures à 70°C. Le matériau ainsi réticulé présentait de bonnes propriétés mécaniques. Sa conductivité était supérieure à $10^{-5}$ $S.cm^{-1}$ dès 20°C, ce qui représente le double de celle d'un film préparé à partir d'un copolymère obtenu en a) ci-dessus.

Le film présentait une bonne tenue mécanique, un allongement relatif supérieur à 1000% a pu être obtenu.

Il présentait en outre une bonne stabilité électrochimique. L'examen d'un voltammogrammne du complexe ci-dessus, réalisé sur une microélectrode de platine à 80°C n'a pas fait apparaître de pic d'oxydation imputable à la dégradation du sel ou du copolymère dans la gamme de potentiel observée (0 V - 4 V vs lithium).

**Exemple 3**

a) Préparation du copolymère

Un copolymère d'oxyde d'éthylène et d'allyl glycidyl éther a été préparé par polymérisation anionique dans un réacteur haute pression en utilisant comme amorceur du tertio-butylate de potassium. Le rapport des motifs allyl glycidyl éther aux motifs oxyde d'éthylène, déterminé par RMN du proton, est de 1/30.

b) Hydrogénation du copolymère

On a dissous 1 g du copolymère obtenu en a) ci-dessus dans 50 ml de xylène et on a ajouté 0,13 g de p-toluènesulfonylhydrazide, le rapport du nombre de doubles liaisons au nombre de moles de p-toluènesulfonylhydrazide étant ainsi de 1. Le mélange a été porté au reflux du xylène. La cinétique de la réaction a été suivie par analyse RMN $H^1$ de prélèvements. L'hydrogénation était totale au bout de 15 minutes.

**Exemple 4**

a) Préparation du copolymère

A 70 g de poly(éthylène glycol) commercial de masse 1000 (commercialisé par Aldrich sous la référence 20,242-8) on a ajouté 5 ml de 2,2-diméthoxypropane. Ensuite, le mélange a été séché dans un évaporateur rotatif à 60°C pour éliminer l'eau résiduelle du polymère. Le polyéthylène glycol ainsi déshydraté a été mis en solution dans le THF. A la solution obtenue, on a ajouté 3 g d'hydrure de potassium, puis 25 ml d'allyl glycidyl éther. Le mélange a été maintenu à 50°C pendant 2 heures, puis le polymère a été précipité dans l'éther et purifié par dissolution dans l'acétone et précipitation dans l'éther à trois reprises.

Le copolymère obtenu comprenait un bloc central poly(éthylène oxyde) de masse 2000 et deux blocs latéraux comprenant chacun 30 motifs allyl glycidyl éther.

b) Hydrogénation du copolymère

1 g du copolymère bloc obtenu en a) ci-dessus a été ajouté à 1,13 g de p-toluènesulfonylhydrazide dans 30 ml de xylène, le rapport du nombre de doubles liaisons au nombre de moles de p-toluènesulfonylhydrazide étant ainsi de 0,9. La solution a ensuite été portée à 130°C et maintenue à cette température pendant 2 heures. L'étude RMN $H^1$ a montré que 70% des doubles liaisons avaient été hydrogénées.

c) Préparation d'une membrane

Le copolymère obtenu en b) a été dissous dans l'acétonitrile en présence de peroxyde de benzoyle, le rapport en poids du peroxyde au copolymère étant de 3%. La solution obtenue a été coulée sur une plaque de verre, ensuite l'acétonitrile a été évaporé et le film obtenu a été porté à 80°C et maintenu à cette température pendant 2 heures sous atmosphère d'argon. On a ainsi obtenu une membrane élastique réticulée présentant de bonnes propriétés mécaniques.

Cette membrane a été immergée dans une solution 1 M de $(CF_3SO_2)_2N^-Li^+$ dans l'acétonitrile, le volume de la solution étant tel que le rapport O/Li de la membrane imprégnée soit égal à 14. Après évaporation de l'acétonitrile, la conductivité de la membrane ainsi traitée, mesurée à 25°C, était de $3x10^{-5}$ $S.cm^{-1}$ et de $10^{-3}$ $S.cm^{-1}$ à 65°C, ce qui représente un gain d'un facteur 2 à 25°C et d'un facteur 4 à 65°C par rapport à une membrane traitée de manière similaire, mais obtenue à partir du copolymère de l'étape a) non hydrogéné.

**Exemple 5**

a) Préparation d'un copolymère

Un copolymère d'oxyde d'éthylène et d'allyl glycidyl éther analogue à celui de l'exemple 3 a) a été préparé.

b) Hydrogénation d'un copolymère

10 g du copolymère ci-dessus ont été dissous dans 120 ml de méthanol, on a ajouté 300 mg de Ni de Raney à 20°C et on a maintenu le mélange réactionnel à cette température pendant 1 heure.

Le nombre de doubles liaisons hydrogénées déterminé par RMN $H^1$ était de 50%.

c) Préparation d'une membrane

Le copolymère obtenu en b) a été complexé par le sel de lithium $(CF_3SO_2)_2N^-Li^+$. Le rapport O/Li du complexe obtenu était de 9. Le complexe a ensuite été introduit dans l'acétonitrile en présence de 3% en poids de peroxyde de benzoyle. A l'aide de la solution obtenue, on a préparé un film ayant une épaisseur de 200 µm, de la même manière que dans l'exemple 1, ensuite le film a été chauffé pendant 2 heures à 70°C sous flux d'argon. La membrane obtenue présentait de bonnes propriétés mécaniques. Sa conductivité était de $10^{-5}$ $S.cm^{-1}$ dès 20°C.

**Exemple 6**

En mettant en oeuvre le mode opératoire de l'exemple 1, on a préparé un polycondensat à partir de poly(oxyéthylène) diol de masse 1000 (POE 1000) (commercialisé par Aldrich sous la référence 20,242-8), et de chloro-3 chlorométhyl-2 propène-1. On a ensuite hydrogéné 10 g du polycondensat obtenu dans les mêmes conditions que dans l'exemple 1. L'analyse

RMN $H^1$ a montré que 50% des doubles liaisons ont été hydrogénées.

On a préparé une membrane réticulée en dissolvant le polymère et 4% en poids de peroxyde de benzoyle dans l'acétonitrile. Après évaporation du solvant, on a chauffé le film obtenu à 80°C pendant 3 heures sous atmosphère d'argon. On a ainsi obtenu une membrane élastique réticulée.

A la membrane réticulée, on a ajouté 20% en poids de N,N,N',N'-tétraéthylsulfonamide (TESA). Une conductivité de $2x10^{-4}$ $S.cm^{-1}$ à 20°C a été obtenue pour une concentration en sel $(CF_3SO_2)_2N^-Li^+$ correspondant à un rapport O/Li du complexe polymère-sel de 16.

**Exemple 7**

A 10 g de copolymère obtenu dans l'exemple 3a, on a ajouté 300 mg de Ni de Raney dans 120 ml de méthanol et on a maintenu le mélange réactionnel à 20°C pendant 1 heure. L'analyse par RMN $H^1$ a montré que 50% des doubles liaisons ont été hydrogénées. On a mis en solution dans l'acétonitrile le copolymère ainsi obtenu, le sel $(CF_3SO_2)_2N^-Li^+$ et 3% en poids de peroxyde de benzoyle. Le rapport O/Li du complexe polymère était de 14. Après évaporation, on a obtenu un film ayant une épaisseur de 200 µm, que l'on a réticulé par chauffage à 70°C pendant 2 heures sous atmosphère d'argon. On a ainsi obtenu une membrane présentant de bonnes propriétés mécaniques à laquelle on a ajouté 50% en poids de carbonate de propylène. Une conductivité de $8x10^{-4}$ $S.cm^{-1}$ a été obtenue à 25°C pour une concentration en sel correspondant à un rapport O/Li de 14.

**Revendications**

1. Procédé pour la préparation d'un copolymère ou d'un polycondensat dont la chaîne macromoléculaire est constituée essentiellement par des unités solvatantes susceptibles d'induire un caractère cristallin, des unités permettant de diminuer la cristallinité du copolymère ou du polycondensat, et éventuellement des unités réticulables, toutes ces unités étant du type oxyalkylène ou du type oxyalkénylène indépendamment les unes des autres, caractérisé en ce que :

   - au cours d'une première étape, on prépare un copolymère ou un polycondensat comprenant des unités solvatantes susceptibles d'induire un caractère cristallin choisies parmi les unités oxyalkylènes dans lesquelles le groupement alkylène porte éventuellement un substituant méthyle, et des unités qui ont une insaturation carbone / carbone choisies parmi les unités oxyalkénylènes dont la double liaison carbone / carbone peut être polymérisée par voie radicalaire, dans des conditions qui n'affectent pas ladite insaturation ;
   - au cours d'une deuxième étape, on procède à l'hydrogénation d'au moins une partie des insaturations.

2. Procédé selon la revendication 1, caractérisé en ce que l'hydrogénation du copolymère ou du polycondensat obtenu à la fin de la première étape du procédé est effectuée sous pression d'hydrogène en présence d'un catalyseur d'hydrogénation.

3. Procédé selon la revendication 2, caractérisé en ce que le catalyseur d'hydrogénation est choisi parmi le nickel de Raney, un catalyseur du type coordiné comprenant un métal de transition, un agent réducteur du type trialkylaluminium et un hydrocarbure insaturé, un complexe cobalt-pyridine, un chélate de nickel et de phénol et un borate du type $BH_3+CH_3CO_2H$.

4. Procédé selon la revendication 1, caractérisé en ce que l'hydrogénation est effectuée au moyen d'un agent d'hydrogénation telle que la p-toluènesulfonylhydrazide.

5. Procédé selon la revendication 1, caractérisé en ce que la première étape consiste à copolymériser par voie cationique au moins un monomère du type oxyde d'alkylène cyclique ou du type acétal cyclique ayant au moins trois chaînons non substitué ou portant un substituant méthyle, et au moins un monomère du type oxyde d'alkylène cyclique ou du type acétal cyclique ayant au moins trois chaînons portant un substituant qui comprend une double liaison carbone - carbone.

6. Procédé selon la revendication 5, caractérisé en ce qu'au moins un monomère du type oxyde d'alkylène cyclique ou du type acétal cyclique ayant au moins trois chaînons est choisi parmi l'oxyde d'éthylène, l'oxyde de propylène, l'oxétane et le dioxolanne portant éventuellement un substituant méthyle, et au moins un monomère du type oxyde d'alkylène cyclique ou du type acétal cyclique ayant au moins trois chaînons est un oxiranne $\overline{CH_2\text{-}CHR'\text{-}O}$ dans lequel le substituant R' est choisi parmi les radicaux qui comportent une insaturation éthylénique, par exemple les radicaux alkényles $CH_2=CH-(CH_2)_q-$ dans lesquels $1 \leq q \leq 6$ et les radicaux $CH_3-(CH_2)_y-CH=CH-(CH_2)_x-$ dans lesquels $0 \leq x+y \leq 5$ et $0 \leq x$, ou parmi les radicaux allyloxyalkylène ayant de 4 à 8 atomes de carbone.

7. Procédé selon la revendication 1, caractérisé en ce que, au cours de la première étape, on effectue une réaction de polycondensation en présence d'une base, d'au moins un composé $A'(OH)_i$ avec au

moins un composé $Z(CH_2X)_j$, les proportions relatives des différents $A'(OH)_i$ étant telles que le rapport du nombre de fonctions OH au nombre de segments A' soit au moins égal à 2, les proportions relatives des différents $Z(CH_2X)_j$ étant telles que le rapport du nombre de radicaux X au nombre de segments Z soit au moins égal à 2 ; A' désignant un segment solvatant non réticulable par voie radicalaire ayant une valence i telle que $1 \leq i \leq 6$ choisi parmi les polyoxyéthylènes, les polyoxypropylènes, les copolyoxyéthylène-oxypropylène, les copolymères d'oxyde d'éthylène ou d'oxyde de propylène avec un comonomère polymérisable par formation de liaisons éthers tel que l'oxyméthylène, l'oxétane, le tétrahydrofurane et le dioxolanne ; Z représentant un radical organique ayant une valence j telle que $1 \leq j \leq 6$, et possédant en outre au moins une insaturation carbone / carbone ; X représentant un groupe partant.

8. Procédé selon la revendication 7, caractérisé en ce que le composé $Z(CH_2X)_j$ est choisi parmi les composés dans lesquels Z est un radical alcényle et X est un groupe partant, par exemple un dihalogénoalcène.

9. Procédé selon la revendication 1, caractérisé en ce que au cours de la première étape, on effectue une copolymérisation en présence d'un catalyseur de Vandenberg, d'un oxiranne répondant à la formule $\overline{CH_2\text{-}CHR^1\text{-}O}$ et d'un oxiranne répondant à la formule $\overline{CH_2\text{-}CHR^2\text{-}O}$, $R^1$ représentant un radical comportant une insaturation carbone / carbone, choisi par exemple parmi les radicaux alkényles $CH_2=CH\text{-}(CH_2)_q\text{-}$ dans lesquels $1 \leq q \leq 6$ et les radicaux $CH_3\text{-}(CH_2)_y\text{-}CH=CH\text{-}(CH_2)_x\text{-}$ dans lesquels $0 \leq x+y \leq 5$ et $0 \leq x$, parmi les radicaux allyloxyalkylène ayant de 4 à 8 atomes de carbone et parmi les radicaux $CH_2=CH\text{-}CO\text{-}O\text{-}CH_2\text{-}$, $CH_2=C(CH_3)\text{-}CO\text{-}O\text{-}CH_2\text{-}$ et $CH_2=CH\text{-}\Phi\text{-}O\text{-}(CH_2)_n\text{-}$, $R^2$ représentant un atome d'hydrogène ou un radical méthyle.

10. Procédé selon la revendication 1, caractérisé en ce que, au cours de la première étape, on effectue une copolymérisation anionique d'au moins un monomère solvatant choisi parmi les oxirannes répondant à la formule $\overline{CH_2\text{-}CHR^3\text{-}O}$ dans laquelle $R^3$ représente H ou un radical méthyle, et d'au moins un monomère comportant une insaturation carbone / carbone, en présence d'un catalyseur choisi parmi les alcoolates de métal alcalin.

11. Procédé selon la revendication 10, caractérisé en ce que l'oxiranne insaturé est choisi parmi les oxirannes répondant à la formule $\overline{CH_2\text{-}CHR^4\text{-}O}$ dans laquelle $R^4$ est choisi parmi les radicaux ayant la formule $CH_2=CH\text{-}(CH_2)_q\text{-}(O\text{-}CH_2)_p$ avec $1 \leq q \leq 6$ et p=0 ou 1, ou parmi les radicaux ayant la formule $CH_3\text{-}(CH_2)_y\text{-}CH=CH\text{-}(CH_2)_x\text{-}(OCH_2)_p$, avec $0 \leq x+y \leq 5$ et p=0 ou 1.

12. Procédé selon la revendication 1, caractérisé en ce que la première étape consiste à préparer un copolymère bloc comportant au moins un segment A solvatant constitué par des unités oxyalkylènes dans lesquelles le groupement alkylène porte éventuellement un substituant méthyle et au moins un segment B constitué par des unités oxyalkénylènes dont la double liaison carbone / carbone peut être polymérisée par voie radicalaire.

## Claims

1. A method for the preparation of a copolymer or of a polycondensate in which the macromolecular chain consists essentially of solvating units capable of inducing a crystalline nature, units making it possible to decrease the crystallinity of the copolymer or of the polycondensate, and optionally crosslinkable units, all these units being of the oxyalkylene type or of the oxyalkenylene type independently of one another, characterized in that:

   - during a first step a copolymer or a polycondensate is prepared, containing solvating units capable of inducing a crystalline nature selected from oxyalkylene units in which the alkylene group optionally carries a methyl substituent, and units which have a carbon-carbon unsaturation selected from oxyalkenylene units in which the carbon-carbon double bond can be polymerized by a radical route in conditions which do not affect the said unsaturation;
   - during a second step the hydrogenation of at least part of the unsaturations is undertaken.

2. A method according to Claim 1, characterized in that the hydrogenation of the copolymer or of the polycondensate obtained at the end of the first step of the method is performed under hydrogen pressure in the presence of a hydrogenation catalyst.

3. A method according to Claim 2, characterized in that the hydrogenation catalyst is chosen from Raney nickel, a catalyst of the coordinated type containing a transition metal, a reducing agent of the trialkylaluminium type and an unsaturated hydrocarbon, a cobalt-pyridine complex, a chelate of nickel and of phenol and a borate of the $BH_3+CH_3CO_2H$ type.

4. A method according to Claim 1, characterized in that the hydrogenation is performed by means of a hydrogenating agent such as p-toluenesulphonohydrazide.

**5.** A method according to Claim 1, characterized in that the first step consists in copolymerizing by a cationic route at least one cyclic alkylene oxide or cyclic acetal monomer containing at least three chain units, unsubstituted or carrying a methyl substituent, and at least one cyclic alkylene oxide or cyclic acetal monomer containing at least three chain units carrying a substituent which contains a carbon-carbon double bond.

**6.** A method according to Claim 5, characterized in that at least one cyclic alkylene oxide or cyclic acetal monomer containing at least three chain units is chosen from ethylene oxide, propylene oxide, oxetane and dioxolane optionally carrying a methyl substituent, and at least one cyclic alkylene oxide or cyclic acetal monomer containing at least three chain units is an oxirane

$$\overline{CH_2\text{-}CHR'\text{-}O},$$

in which the substituent R' is chosen from the radicals which contain an ethylenic unsaturation, for example $CH_2=CH-(CH_2)_q$-alkenyl radicals in which $1 \le q \le 6$ and the radicals $CH_3-(CH_2)_y-CH=CH-(CH_2)_x-$ in which $0 \le x+y \le 5$ and $0 \le x$, or from the allyloxyalkylene radicals containing from 4 to 8 carbon atoms.

**7.** A method according to Claim 1, characterized in that, during the first step, a polycondensation reaction is performed, in the presence of a base, of at least one compound $A'(OH)_i$ with at least one compound $Z(CH_2X)_j$, the relative proportions of the different $A'(OH)_i$ being such that the ratio of the number of OH functional groups to the number of segments A' is at least equal to 2, the relative proportions of the different $Z(CH_2X)_j$ being such that the ratio of the number of radicals X to the number of segments Z is at least equal to 2 ; A' denoting a solvating segment not capable of being crosslinked by a radical route, which has a valency i such that $1 \le i \le 6$, selected from polyoxyethylene, polyoxypropylene, copolyoxyethyleneoxypropylene, and copolymers of ethylene oxide or of propylene oxide with a comonomer capable of polymerizing by forming ether bonds, such as oxymethylene, oxetane, tetrahydrofuran and dioxolane ; Z denoting an organic radical which has a valency j such that $1 \le j \le 6$, and additionally containing at least one carbon-carbon unsaturation ; X denoting a leaving group.

**8.** A method according to Claim 7, characterized in that the compound $Z(CH_2X)_j$ is chosen from the compounds in which Z is an alkenyl radical and X is a leaving group, for example a dihaloalkene.

**9.** A method according to Claim 1, characterized in that, during the first step, a copolymerization of an oxirane corresponding to the formula

$$\overline{CH_2\text{-}CHR^1\text{-}O},$$

and of an oxirane corresponding to the formula

$$\overline{CH_2\text{-}CHR^2\text{-}O},$$

is performed in the presence of a Vandenberg catalyst, $R^1$ denoting a radical containing a carbon-carbon unsaturation, chosen, for example, from the alkenyl radicals $CH_2=CH-(CH_2)_q-$ in which $1 \le q \le 6$ and the radicals $CH_3-(CH_2)_y-CH=CH-(CH_2)x-$ in which $0 \le x+y \le 5$ and $0 \le x$, from the allyloxyalkylene radicals containing from 4 to 8 carbon atoms and from the radicals $CH_2=CH-CO-O-CH_2-$, $CH_2=C(CH_3)-CO-O-CH_2-$ and $CH_2=CH-\Phi-O-(CH_2)n-$, $R^2$ denoting a hydrogen atom or a methyl radical.

**10.** A method according to Claim 1, characterized in that, during the first step, an anionic copolymerization is performed of at least one solvating monomer chosen from oxiranes corresponding to the formula

$$\overline{CH_2\text{-}CHR^3\text{-}O},$$

in which $R^3$ denotes H or a methyl radical, and of at least one monomer containing a carbon-carbon unsaturation, in the presence of a catalyst chosen from alkali metal alcoholates.

**11.** A method according to Claim 10, characterized in that the unsaturated oxirane is chosen from oxiranes corresponding to the formula

$$\overline{CH_2\text{-}CHR^4\text{-}O},$$

in which $R^4$ is chosen from the radicals which have the formula $CH_2=CH-(CH_2)_q-(O-CH_2)_p$ with $1 \le q \le 6$ and p = 0 or 1, or from the radicals which have the formula $CH_3-(CH_2)_y-CH=CH-(CH_2)_x-(OCH_2)_p$, with $0 \le x+y \le 5$ and p = 0 or 1.

**12.** A method according to Claim 1, characterized in that the first step consists in preparing a block copolymer containing at least one solvating segment A consisting of oxyalkylene units in which the alkylene group optionally carries a methyl substituent, and at least one segment B consisting of oxyalkenylene units in which the carbon-carbon double bond can be polymerized by a radical route.

**Patentansprüche**

**1.** Verfahren zur Herstellung eines Copolymers oder eines Polykondensats, dessen makromolekulare

Kette im wesentlichen aus solvatisierenden Einheiten, die kristalline Beschaffenheit induzieren können, aus Einheiten, die es ermöglichen, die Kristallinität des Copolymers oder des Polykondensats zu verringern, und gegebenenfalls aus vernetzbaren Einheiten besteht, wobei alle diese Einheiten unabhängig voneinander dem Oxyalkylen- oder dem Oxyalkenylentyp angehören, dadurch gekennzeichnet, dass

im Verlauf eines ersten Schritts ein Copolymer oder ein Polykondensat hergestellt wird, das solvatisierende Einheiten, die kristalline Beschaffenheit induzieren können und aus Oxyalkyleneinheiten ausgewählt sind, in denen die Alkylengruppe gegebenenfalls einen Methylsubstituenten trägt, sowie Einheiten umfasst, die eine Kohlenstoff-Kohlenstoff-Unsättigung aufweisen und aus den Oxylalkenyleneinheiten ausgewählt sind, deren Kohlenstoff-Kohlenstoff-Doppelbindung radikalisch polymerisiert werden kann, unter Bedingungen, welche die Unsättigung nicht beeinträchtigen;

im Verlauf eines zweiten Schritts die Hydrierung zumindest eines Teils der Unsättigungen erfolgt.

2. Verfahren nach Anspruch 1, dadurch gekennzeichnet, dass die Hydrierung des am Ende des ersten Schritts des Verfahrens erhaltenen Copolymers oder Polykondensats unter Wasserstoffdruck in Gegenwart eines Hydrierungskatalysators durchgeführt wird.

3. Verfahren nach Anspruch 2, dadurch gekennzeichnet, dass der Hydrierungskatalysator aus Raney-Nickel, einem Katalysator vom Koordinations-Typ, der ein Übergangsmetall, ein Reduktionsmittel vom Trialkylaluminiumtyp und einen ungesättigten Kohlenwasserstoff umfasst, einem Kobalt-Pyridin-Komplex, einem Nickelchelat und einem Phenol sowie einem Borat vom Typ $BH_3$ + $CH_3CO_2H$ ausgewählt ist.

4. Verfahren nach Anspruch 1, dadurch gekennzeichnet, dass die Hydrierung mit einem Hydrierungsmittel, wie z.B. p-Toluolsulfonylhydrazid, durchgeführt wird.

5. Verfahren nach Anspruch 1, dadurch gekennzeichnet, dass der erste Schritt in der kationischen Polymerisation zumindest eines Monomers vom zyklischen Alkylenoxidtyp oder vom zyklischen Acetaltyp, das zumindest drei Kettenglieder aufweist und nicht-substituiert ist oder einen Methylsubstituenten trägt, mit zumindest einem Monomer vom zyklischen Alkylenoxidtyp oder vom zyklischen Acetaltyp, das zumindest drei Kettenglieder aufweist und einen Substituenten trägt, der eine Kohlenstoff-Kohlenstoff-Doppelbindung umfasst, besteht.

6. Verfahren nach Anspruch 5, dadurch gekennzeichnet, dass zumindest ein Monomer vom zyklischen Alkylenoxidtyp oder vom zyklischen Acetaltyp mit zumindest drei Kettengliedern aus Ethylenoxid, Propylenoxid, Oxetan und Dioxolan ausgewählt ist, das gegebenenfalls einen Methylsubstituenten trägt, und zumindest ein Monomer vom zyklischen Alkylenoxidtyp oder vom zyklischen Acetaltyp mit zumindest drei Kettengliedern ein Oxiran

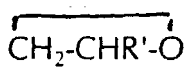

ist, worin der Substituent R' aus Resten ausgewählt ist, die eine ethylenische Unsättigung aufweisen, z.B. aus Alkenylresten $CH_2=CH-(CH_2)_q-$, worin gilt: $1 \leq q \leq 6$ und Resten $CH_3-(CH_2)_y-CH=CH-(CH_2)_x-$, worin gilt: $0 \leq x+y \leq 5$ und $0 \leq x$, oder aus Allyloxyalkylenresten mit 4 bis 8 Kohlenstoffatomen.

7. Verfahren nach Anspruch 1, dadurch gekennzeichnet, dass im Verlauf des ersten Schritts eine Polykondensationsreaktion in Gegenwart einer Base zumindest einer Verbindung $A'(OH)_i$ mit zumindest einer Verbindung $Z(CH_2X)_j$ durchgeführt wird, wobei die relativen Anteile der verschiedenen Verbindungen $A'(OH)_i$ so sind, dass das Zahlenverhältnis der OH-Funktionalitäten zu den Segmenten A' zumindest 2 beträgt, wobei die relativen Anteile der verschiedenen Verbindungen $Z(CH_2X)_j$ so sind, dass das Verhältnis zwischen der Anzahl an Resten X und der Anzahl an Segmenten Z zumindest 2 beträgt; wobei A' ein solvatisierendes Segment bezeichnet, das nicht radikalisch vernetzbar ist, eine solche Wertigkeit i aufweist, dass gilt: $1 \leq i \leq 6$, und aus Polyoxyethylenen, Polyoxypropylenen, Copolyoxyethylen-oxypropylen, Copolymeren von Ethylenoxid oder Propylenoxid mit einem Comonomer, das unter Ausbildung von Etherbindungen polymerisierbar ist, wie z.B. Oxymethylen Oxefan, Tetrahydrofuran und Dioxolan, ausgewählt ist; wobei Z für einen organischen Rest mit einer solchen Wertigkeit j steht, dass gilt: $1 \leq j \leq 6$ ist, der außerdem zumindest eine Kohlenstoff-Kohlenstoff-Unsättigung aufweist; und wobei X eine Abgangsgruppe darstellt.

8. Verfahren nach Anspruch 7, dadurch gekennzeichnet, dass die Verbindung $Z(CH_2X)_j$ aus Verbindungen, in denen Z ein Alkenylrest und X eine Abgangsgruppe ist, beispielsweise Dihalogenalkenen, ausgewählt ist.

**9.** Verfahren nach Anspruch 1, dadurch gekennzeichnet, dass im Verlauf des ersten Schritts Copolymerisation eines Oxirans der Formel

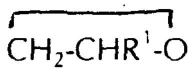

und eines Oxirans der Formel

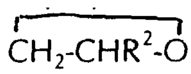

in Gegenwart eines Vandenberg-Katalysators durchgeführt wird, wobei $R^1$ einen Rest darstellt, der eine Kohlenstoff-Kohlenstoff-Unsättigung aufweist, ausgewählt beispielsweise aus Alkenylresten $CH_2=CH-(CH_2)_q-$, worin gilt: $1 \leq q \leq 6$, und Resten $CH_3-(CH_2)_y-CH=CH-(CH_2)_x-$, worin gilt: $0 \leq x+y \leq 5$ und $0 \leq x$ aus Allyloxyalkylenresten mit 4 bis 8 Kohlenstoffatomen und aus Resten $CH_2=CH-CO-O-CH_2-$, $CH_2=C(CH_3)-CO-O-CH_2-$ und $CH_2=CH-\phi-O-(CH_2)_n-$, wobei $R^2$ für ein Wasserstoffatom oder einen Methylrest steht.

**10.** Verfahren nach Anspruch 1, dadurch gekennzeichnet, dass im Verlauf des ersten Schritts anionische Copolymerisation zumindest eines solvatisierenden Monomers, das aus Oxiranen der Formel

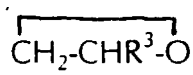

ausgewählt ist, worin $R^3$ für H oder einen Methylrest steht, mit zumindest einem Monomer, das eine Kohlenstoff-Kohlenstoff-Unsättigung aufweist, in Gegenwart eines aus Alkalimetallalkoholaten ausgewählten Katalysators durchgeführt wird.

**11.** Verfahren nach Anspruch 10, dadurch gekennzeichnet, dass das ungesättigte Oxiran aus Oxiranen der Formel

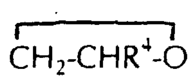

ausgewählt ist, worin $R^4$ aus Resten der Formel $CH_2=CH-(CH_2)_q-(O-CH_2)_p$, mit $1 \leq q \leq 6$ und $p = 0$ oder 1, oder aus Resten der Formel $CH_3-(CH_2)_y-CH=CH-(CH_2)_x-(OCH_2)_p$, mit $0 \leq x+y \leq 5$ und $p = 0$ oder 1, ausgewählt ist.

**12.** Verfahren nach Anspruch 1, dadurch gekennzeichnet, dass der erste Schritt darin besteht, ein Blockcopolymer herzustellen, das zumindest ein solvatisierendes Segment A, das aus Oxylalkyleneinheiten besteht, in denen die Alkylengruppe gegebenenfalls einen Methylsubstituenten trägt, und zumindest ein Segment B umfasst, das aus Oxyalkenyleneinheiten besteht, deren Kohlenstoff-Kohlenstoff-Doppelbindung radikalisch polymerisiert werden kann.